# EUROPEAN PATENT APPLICATION

(11) **EP 4 442 123 A2**
(43) Date of publication of application: **09.10.2024**
(21) Application number: 24195627.5
(22) Date of filing: 15.07.2015
(51) Int. Cl.: A23K 10/24, A23K 10/26, A23K 50/42, A23K 50/48, A23K 50/45

(54) **PET FOOD PRODUCT**

(62) Divisional of application: 15832833.6
(71) Applicant: Mars, Incorporated, McLean, VA 22101 (US)
(72) Inventor: BESSONOV, Andrey Nikolaevich, 142800 Moscow region (RU); PEREVERZEVA, Galina Anatolievna, 142800 Moscow region (RU)
(74) Representative: Haseltine Lake Kempner LLP

(57) **Abstract**

The present invention relates to a meat like chunk comprising a mixture of blood and intestines. The invention also relates to methods of making a meat like chunk.

## Description

The present invention relates to a composition comprising a mixture of blood and intestines. The invention also relates to a meat like chunk comprising such a composition and a moist pet food comprising such a meat like chunk. The invention also relates to methods of making the composition, the meat like chunk and a moist pet food, or a dry pet food.

Commercial pet food products are designed to be nutritious and palatable. Producing a complete and balanced pet food that provides all the nutrition needed for a companion animal is a complex task. There is a continuing desire, in the field, to produce palatable and nutritious pet food products at economical cost and using sustainable methods, for example using materials that are not in the human food chain to avoid competing with the human food chain.

In a first aspect, the invention provides a composition comprising a mixture of blood and intestines.

The preferred blood is poultry blood (due to various factors including availability). Other blood includes cattle, swine, sheep and/or goat blood. Intestines are the gastrointestinal tract of an animal, and may include the stomach and up to 5% or up to 10% other parts from the animal. For example, intestines may include up to 5% or up to 10% by weight of lung, liver and/or heart. In the present invention, the intestines are preferably poultry intestines or include cattle, swine, sheep and/or goat intestines. The blood and the intestines may be derived from the same animal, the same species or from different species of animals. Preferably the blood and the intestines are poultry blood and poultry intestines. The composition of the first aspect of the invention comprises or is a mixture of blood and intestines, optionally with water. The mixture of blood and intestines may be blended/substantially homogenised. The composition of the first aspect of the invention may contain or may not contain any other meat ingredient (than the intestine as herein described) or any other non-meat ingredient. An homogenised mixture is formed by blending or homogenising the components together so that the constituent parts are indistinguishable. Homogenisation is the process of reducing and standardising the particle size of fluid products under conditions of extreme pressure, sheer, turbulence, acceleration and impact. The effect is usually achieved by forcing the composition through a specialised homogenising valve at very high pressure, although other methods may be utilised. Where the composition of the first aspect includes other ingredients, the blood and intestines may be mixed or homogenised before combining with one or more of the other ingredients, or afterwards.

In the composition, the blood may be present in the ranges of 20% to 80% and/or the intestines may be present in the ranges of 80% to 20% on a wet weight basis.

In the composition, the intestines and blood may be in a ratio from 4:1 to 1:4, preferably in a ratio of from 3:1 to 1:1, more preferably in a ratio of from 5:2 to 3:2, even more preferably in a ratio of about 2:1.

The composition may comprise titanium dioxide (TiO₂). Titanium dioxide is a white colouring agent. The amount of colouring agent necessary to provide the requisite colour is very small, usually less than 1 per cent. The titanium dioxide may be present in the ranges of 0.1% to 10% or in the ranges of 0.1% to 1%, or in the ranges of 0.5 to 2%, all on a wet weight basis. The titanium dioxide is preferably added before any cooking of the homogenised mixture. Other colouring agents that may be added to the composition including sunset yellow, tartrazine, ponceau 4r and patent blue V.

The composition may also comprise other food ingredients selected from meat and/or non-meat pet food ingredients and flavours, emulsifiers, antioxidants or mixtures thereof. Flavours may be added in the range of 0.1 % to 20% on a wet weight basis. Flavour may be added to give food a particular taste or smell and may be derived from natural ingredients or artificially created. Flavours include one or more products of the Maillard reaction. Emulsifiers may be added in the range of 0.1% to 20% on a wet weight basis. Emulsifiers allow water and oils to remain mixed together in an emulsion or homogenised mixture. Emulsifiers include one or more of Diacetyl tartaric acid, Ethoxylated mono and Diglycerides, Monosodium Glutamate, Monosodium phosphate derivatives, Montmorillanite, Polyoxyethylene Glycol, Polysorbate 80, Polysorbate 60, Polyoxy Ethylene 20, Sorbitan Monostearate, Propylene Glycol and/or Sodium stearoyl lactayl. Antioxidants may be added in the range of 0.1% to 20% on a wet weight basis. Antioxidants act as preservatives by inhibiting the effects of oxygen on food. Antioxidants include one or more of vitamin C, vitamin E and selenium.

The mixture of the first aspect of the invention is a meat-based raw material which is effective as a component for pet food products, in particular moist pet food products. Preferably, the mixture of blood and intestines is used in the formation of meat like chunks which are subsequently incorporated into pet food products. Typically, moist pet food products are formed as (and are known as) chunks in gravy and/or chunks in jelly products or formed as a meat loaf product. The mixture of the first aspect of the invention may also be incorporated into other pet food products, such as semi-moist products and dry kibble products, as well as snacks and treats. Preferably the composition of the first aspect of the invention contains 50% or more, 60% or more, 70% or more, 80% or more, 90% or more or 100% blood and intestines (as defined in this text).

The composition according to the first aspect of the invention may be incorporated into any product which an animal, such as a dog or a cat, may consume in its diet. The term animal in this text includes any animal that could benefit from or enjoy the consumption of the food compositions of the present invention, including canine animals. Most preferably, the animal is a pet dog or pet cat. Thus the invention covers standard food products, supplements, pet food, snacks, care and treats. The food product is preferably a cooked product.

In a second aspect, the invention provides a meat like chunk, comprising a composition as described according to the first aspect of the invention.

The composition of the first aspect can form, preferably together with at least one further ingredient, the meat like chunk of the second aspect of the invention. A meat-like chunk may include, in addition to the composition of the first aspect of the invention, real meat, real fish, a meat analogue, vegetable, or combinations thereof e.g. a combination of meat analogue chunk with a real meat chunk. An optional feature of the meat-like chunk is some form of gelling/solidifying agent as an ingredient. The meat like chunk may comprise or consist of a composition of the first aspect of the invention and a gelling agent. Such an agent may be a gum, for example one or more of xanthan gum, locust bean gum, agar gum, guar gum, sodium carboxy methylcellulose, carrageenan alginate gum or others. The chunks may contain, in addition to the composition of the first aspect of the invention, one or more of meat, meat by-products; cereals e.g. maize, rice, wheat, barley, oats, rye, quinoa; and vegetable protein extracts e.g. glutamic acid. The chunk size will vary and depends on the animal that is consuming the pet food. Chunk size can range in length from 5mm to 200mm, preferably 10mm to 100mm, more preferably 20mm to 80mm, and even more preferably 5 mm to 10 mm.

The chunk of the second aspect of the invention may be in the form of a fibrous meat-like chunk, or a steam-formed meat-like chunk. Fibrous meat-like chunks have improved fiber definition (visible small diameter fibers) that afford the product a realistic meat-like image.

The meat like chunk of the second aspect of the invention is preferably one wherein the composition of the first aspect of the invention makes up from 5% to 90% by weight of the meat-like chunk, 20% to 50% by weight or 20% to 40% by weight of the meat like chunk.

The composition according to the first aspect of the invention may be in the form of an emulsion and is added, usually to an extruder or mixer to form the meat like chunk.

In a third aspect of the invention, there is provided a moist pet food wherein the moist pet food product contains from 50 to 90% moisture and comprises the meat like chunk as described according to the second aspect of the invention. The moist pet food of the third aspect of the invention may contain between 10 to 50% by weight of the meat like chunk of the second aspect, or 15 to 40% by weight or 20 to 35% by weight of the meat like chunk of the second aspect of the invention. The third aspect of the invention, in terms of a moist pet food comprises the meat like chunk and other ingredients to form a moist pet food. The other ingredients may be in the form of a gravy or jelly (to form a solids/chunks in gravy or jelly product) or meat or other ingredients to form, for example, a meat loaf product. Meat loafs are usually prepared by comminuting raw meat material and gelling agents and optionally mixing it with water, salt, spices, curing agents. The mixture is heated to 20°C. The mixture is combined with the meat like chunk of the second aspect of the invention. The mixture is then filled into cans to form, after retorting and cooling, a meat loaf.

The gravy or jelly comprises one or more additional ingredients selected from the group consisting of a liquid carrier e.g. water, fats or oils, a thickening agent and flavouring agents. The gravy or jelly is generally a coating material which surrounds the meat like chunk. The gravy or jelly will likely contain a thickening agent which is used to control its consistency.

The flavouring agents such as, artificial beef flavour and artificial meat flavour, can be used in amounts sufficient to impart the desired flavour. It is preferred to provide sufficient nutritional ingredients in the moist pet food to achieve a nutritionally balanced pet food. Nutritional ingredients may include one or more of meat and other animal products, raw meaty bones, boneless meat, fish, organs, eggs, dairy products, fruits and vegetables, grains, supplements such as calcium oils, fish oil, cod liver oil, plant oils, vitamins, vitamin D, vitamin E and iodine.

In a fourth aspect, the invention provides a method of making a composition as described according to a first aspect of the invention, wherein the method comprises the steps,
i) combining blood and intestines,
ii) optionally cooling the blood and/or the intestines to a temperature below 10°C,
iii) mixing together the blood and the intestines.

The optional step ii) may be before or after step iii).

As described for the first aspect of the invention, the mixing may be blending/substantially homogenising.

The blood and intestines can be stored separately or together (mixed or homogenised or other) for up to 6 hours, up to 12 hours, up to 18 hours, up to 24 hours, up to 30 hours, up to 36 hours and up to 48 hours. The blood and intestines can be stored together or separately (mixed or homogenised or other) at temperatures below 10°C, below 0°C, below -20°C, below -80°C. The ingredients are mixed. They can be homogenised using an homogeniser. The homogeniser may be an emulsifying pump or high speed bowl chopper.

The mixing (optionally homogenising) of the blood and intestines, may be in the presence or absence of other ingredients, as described above in relation to the first aspect of the invention.

The method of making the composition optionally includes the step of adding titanium dioxide or any other colouring agent to the blood or the intestines or the mixture of blood and intestines or the homogenised mixture of blood and intestines.

The quantities of titanium dioxide or other colouring are as described above in relation to the first aspect of the invention.

In a fifth aspect of the invention, there is provided a method of making a meat like chunk wherein the method comprises taking a composition according to the first aspect of the invention, adding at least one additional ingredient selected from the group consisting of grain gluten, cereal, other protein gels, gelling agent, gum, minerals, vitamins and meat to the composition and forming a meat like chunk. The method may include the method steps to produce the first aspect of the invention (as described as the fourth aspect of the invention). The forming of meat-like chunks is carried out according to processes known in the art. These include processes to form the chunk by extrusion through nozzles and/or heating. Some form of gum may be added during the process. The ingredients to make the meat-like chunk are mixed and heated/extruded sufficiently (optionally with pressure) to coagulate the mixed blood and intestine composition and thereby solidify the mixture. Heating temperatures from 90-150°C, preferably 100-120°C for 1 to 10 minutes, preferably about 1 minute. The cooled coagulated meat-like chunk product is then cut into portions/chunks as desired.

One method used to form the meat-like chunk is described in WO 00/69276 and uses higher-moisture extrusion techniques to create a Higher Moisture Extruded Chunk. US 4,247,562 also describes the process of making meat-like chunks. In general the chunk is produced using a heated extruder to combine ingredients along with water. In the extruder, the mixture is plasticised and heated to form a hot, viscous and at least partly molten mass (i.e. protein lava). The viscous mass of proteinaceous material is pressed by the extruder screws through a breaker plate having a multitude of small openings. The extruder barrels and screw then mixes, heats, coagulates, expands and shears the formulated meat emulsion into a meat-like mass which is then formed with different types of die plates for different shapes and cut by standard knives for different thickness. Another method used to form the meat-like chunk includes the use of a steam tunnel to cook the combined ingredients. The ropes produced are cut into the meat-like chunks by standard knives. The steam tunnel is a conveyor system that transports the product through the steam installation. The products are blanched or cooked with saturated steam which is injected from above and below the conveyor belt which exposes the product to a continual and even application of steam to ensure it is cooked thoroughly.

In a sixth aspect of the invention, there is provided a method of making a moist pet food wherein the method comprises the steps of combining gravy, jelly, meat or meat batter to the meat like chunk, optionally heating and optionally packaging the product.

The moist pet food may be a meat loaf, optionally wherein the meat like chunk of the second aspect of the invention comprises from 5% to 90% by weight of the loaf, or 20% to 60% by weight or 20% to 50%, or 1 to 25% by weight of the meat loaf. Alternatively, the moist pet food may contain these specified amounts of the composition of the first aspect of the invention.

After the meat like chunk is made (optionally diced or cubed to an appropriate size) it/they are placed in a can or other package. The meat like chunk may be added to the can while a hot or cold gravy solution or jelly-type material (e.g. 150°F to 200°F), may be poured over the product to produce a ready-to-eat meat like chunk in gravy or in jelly. This method allows the meat like chunk to warm up and untrapped gases to be expelled prior to closing the packaging. The filled packages/cans may be vacuum closed and processed using commercially acceptable sterilisation techniques. Alternatively, ingredients are added to the meat like chunk and packaged, where the ingredients, in the usual sterilisation process result in the formation of a jelly or gravy mixed with the meat like chunk in the package.

In various embodiments, when the blood and intestines is in the form of a chunks in gravy or chunks in jelly product, the chunks to gravy ratio and/or jelly ratio is about 20:80, 30:70, 40:60, 45:55,, 50:50 and 55:45.

The method of making the moist pet food may also include the steps of making the meat like chunk and/or making the mixed blood and intestine composition (as described according to the fourth and fifth aspects of the invention). The method may include the step of packaging the moist pet food. The packaging may be in a can (tin) or jar (e.g. glass) or otherwise a plastic, metal, foil pouch, or flexifoil all of which can be sealed.

A seventh aspect of the invention provides a dry pet food wherein the dry food contains from 5 to 15% moisture and at least 5% by weight of a composition of the first aspect of the invention. The dry pet food may contain up to 25% of the composition of the first aspect of the invention. The dry pet food may be in the form of an expanded starch matrix.

A typical dry cat or dog food contains 5 to 15% moisture. It may contain about 10 to 70% crude protein, about 10 to 60% fat and the remainder being carbohydrate, including dietary fibre and ash.

The remaining components of the dry pet food are not essential to the invention and typical standard products can be included. The combined ingredients of the food according to the invention can provide all of the recommended vitamins and minerals for the particular animal in question (a complete and balanced food).

In an eighth aspect, the invention provides a method of making a dry pet food product wherein the method comprises: adding to the composition according to the first aspect of the invention at least one additional ingredient and forming a dry pet food. The additional ingredient may be selected from the group consisting of grain, gluten, cereal, other protein gels, minerals, vitamins and meat. The method may involve passing the ingredients through an extruder, with heat. The ingredients are typically mixed in a mixer and the resultant dough is heated in the pre-conditioner prior to the extruder. The dough is added to the extruder and cooked under intense heat and pressure as it passes through the extruder. At the end of the extruder the hot dough passes through a shaping die and knife. Once extruded and under a standard air pressure, the small pieces expand into a dry pet food typically referred to as a kibble.

The produced kibbles are typically dried in an oven to remove moisture. The kibbles are then cooled and optionally passed through a machine that sprays a coating.

The process of the eighth aspect of the invention may include the method of making the composition of the first aspect of the invention.

In the preparation of pet food products generally, ingredient selection can have a high impact on pet food texture, uniformity, extrudability, nutritional quality and ability to accept high levels of fat and water to provide the aforementioned qualities. The present invention provides products which resembles natural meat in texture and appearance. The present invention provides a composition which is able to perform the necessary binding functionality to resemble a meat product.

Blood contributes a high percentage of protein and supplements the colour, odour, flavour and nutrients of pet food, including a moist packaged pet food. It is possible to add blood to the gravy to form a moist pet food, however high levels of citrated or liquid blood can cause the moist pet food to become a food with a dark unappetising colour, odour and flavour. Blood does not form stable meat-like chunks when simply added to a gravy. Use of blood as a raw material has had associated disadvantages. The present invention overcomes these disadvantages.

Blood is an economical source of protein in ample supply. It is also palatable, has very little ash and therefore has advantages when incorporated, according to the present invention, in a pet food.

Surprisingly the inventors have found an additional format to utilise blood in pet foods without compromising taste, meat-like texture of the meat-like chunk or meat loaf and without increasing the risk of contamination in a pet food.

The present invention also utilises waste from livestock processing.

The present invention is represented by figures, in which:
- Figure 1: Shows graphical representation of results from a water holding and fat holding capacity test of the homogenised mixture of blood and intestines versus intestine alone or beef spleen alone.
- Figure 2: Shows graphical representation of results from a microbial test of the homogenised mixture of blood and intestines versus intestine alone.

The present invention will now be described with reference to the following non-limiting examples:

### Examples

### Experiment 1

Production of a homogenised blood intestine composition.

Blood and intestines were collected from chickens and cooled to 5°C within 30 minutes of collection.

The blood and intestines were stored at <7°C for maximum 72 hours. The blood and intestines were placed in an homogenizing equipment at a blood to intestines ratio of 2:1. The mixture was homogenised using an emulsifying pump to produce an homogenised mixture of blood and intestines, after which titanium dioxide was added at a concentration up to 1.7% of the emulsion. The blood content was 1/3 of the emulsion.

### Composition Properties

The homogenised mixture of blood and intestine and intestine alone and blood alone were tested for their water holding and fat holding capacity. Homogenised samples (10 to 15) of raw material are weighed (to obtain mean mass value - M1) in test tubes and mixed with phosphate buffer (for water holding capacity) or sunflower oil (for fat holding capacity) at 1/1 ratio. Then test tubes are heated in a water bath for 6 minutes at 95°C and centrifuged for 15 minutes at 4000 rpm. Supernatant was removed, precipitate was extracted from the test tube and weighed (to obtain mean mass value - M2). Fat or water holding capacity was calculated as a difference between M2 and M1.

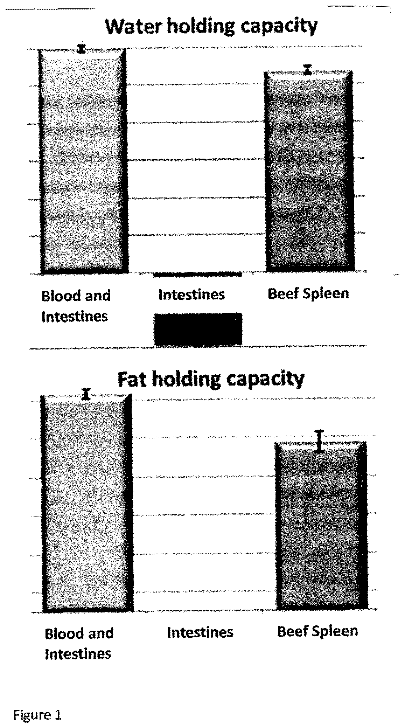

Figure 1 shows that the homogenised mixture of blood and intestines was able to retain fat and water better than intestine alone or a beef spleen alone (intestines alone have a negative water holding capacity).

### Microbial Analysis

The homogenised mixture of blood and intestines was tested for microbial contamination by removing sample aliquots from the mixture and running a standard microbial test on the samples. The samples were tested for the presence of Enterobacteriaceae, Pseudomonas, Lactobacillus, Yeast and Total Viable Count (total amount of aerobic/anaerobic microorganisms).

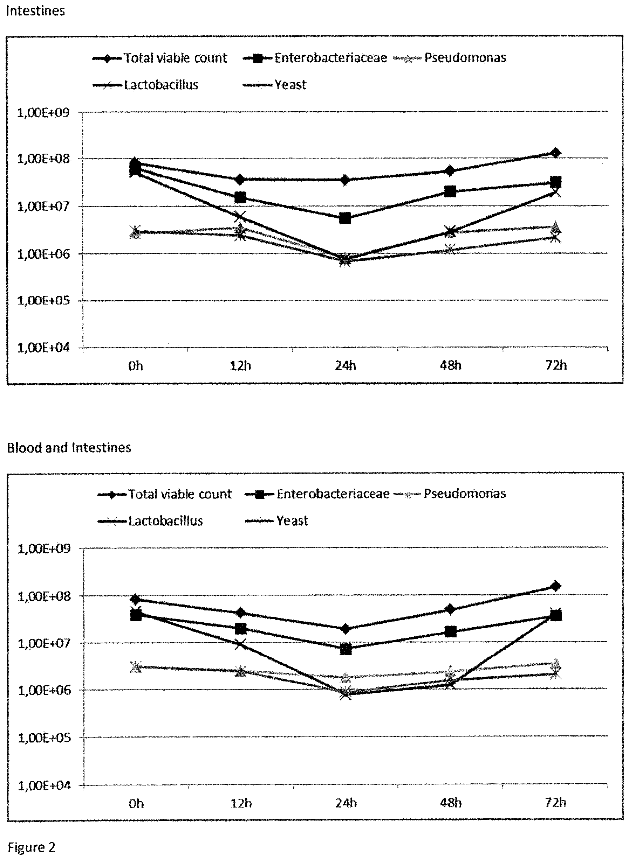

Figure 2 shows that the bacterial growth rate does not change with the addition of blood to intestines, compared to samples of intestine alone.

### Experiment 2

The homogenised mixture described in Experiment 1 together with meat and meat by-products, vegetables, cereals, vitamins, minerals and essential components (e.g. taurine or omega-6 sources) necessary to produce a nutritionally complete pet food was cooked into chunks using a steam tunnel.

A palatability test was performed and an improvement in the palatability of the moist pet food with chicken containing the homogenised intestine and blood mixture (DEV) compared to the standard moist pet food with chicken in gravy (STD) was observed.

### Experiment 3

Using the same method outlined in Experiment 1 and 2 to produce the chunk containing the homogenised intestine and blood mixture, the mixture was added to pet food and made into a moist pet food chunk with beef in gravy.

A palatability test was performed and no significant difference in palatability between standard moist pet food with beef (STD) and the moist pet food with beef containing the homogenised mixture of blood and intestines (DEV) was observed.

### Experiment 4

Using the same method outlined in Experiment 1 and 2 to produce the chunk containing the homogenised intestine and blood mixture, the mixture was added to pet food and made into moist pet food with chicken in jelly.

A palatability test was performed and an improvement in the palatability in the moist pet food with chicken containing the homogenised intestine and blood mixture (DEV) compared to the standard moist pet food with chicken in jelly (STD) was observed.

### Experiment 5

Using the same method as outlined in Experiment 1 and 2 to produce the chunk containing the blood intestine mixture, the mixture was added to pet food in gravy.

A palatability test was performed and an improvement in the palatability in the moist pet food containing the homogenised intestine and blood mixture (DEV) compared to the standard moist pet food in gravy (STD) was observed.

### Experiment 6

Using the same method as outlined in Experiment 1 and 2 to produce the chunk containing the blood intestine mixture, the mixture was added to pet food in jelly.

A palatability test was performed and an improvement in the palatability in the moist pet food containing the homogenised intestine and blood mixture (DEV) compared to the standard moist pet food in jelly (STD) was observed.

### Experiment 7

Using the same method as outlined in Experiment 1 and 2 to produce the chunk containing the blood intestine mixture, the mixture was added to a dog pet food in jelly.

A palatability test was performed and moist pet food containing the blood and intestine homogenised mixture was compared to a standard reference recipe and was found to have the same or an improved texture after the steam tunnel step and after 2 weeks of maturation according to standard Texture Profile Analysis. An improvement in the palatability in the moist pet food containing the homogenised intestine and blood mixture (DEV) compared to the standard recipe alone (STD) was observed.

In summary the intestine and blood mix showed improved or the same texture and palatability as the standard pet food alone.
1. A composition comprising a mixture of blood and intestines.
2. The composition according to para 1 wherein the blood and the intestines are poultry blood and poultry intestines.
3. The composition according to paras 1 or 2 wherein the blood is present in the composition in the ranges of 20% to 80% and/or the intestines is present in the ranges of 80% to 20% on a wet weight basis.
4. The composition according to any one of the preceding paras wherein the intestines and blood are in a ratio from 4:1 to 1:4, preferably from 3:1 to 1:1, more preferably from 5:2 to 3:2, even more preferably about 2:1.
5. A meat like chunk comprising a composition as defined in any one of paras 1-4.
6. A meat like chunk according to para 5 wherein the composition makes up from 5% to 90% by weight of the meat like chunk.
7. A meat like chunk according to paras 5 or 6 wherein the meat like chunk comprises at least one additional ingredient selected from the group consisting of grain gluten, cereal, other protein gels, minerals, vitamins and meat.
8. A moist pet food wherein the moist pet food product contains from 50 to 90% moisture and comprises a meat like chunk according to any one of paras; 5 to 7.
9. A moist pet food of para 8 wherein the moist pet food product contains gravy or jelly material.
10. A method of making a composition according to any one of paras 1 to 4 wherein the method comprises the steps of
   i) combining blood and intestines,
   ii) optionally cooling the blood and/or the intestines to a temperature below 10°C,
   iii) mixing together the blood and the intestines, optionally including one or more additional ingredients.
11. A method of making a meat like chunk according to any one of paras 5 to 7, wherein the method comprises adding at least one additional ingredient selected from the group consisting of grain gluten, cereal, other protein gels, minerals, vitamins and meat to a composition of any one of paras 1 to 4 and forming a meat like chunk.
12. A method of making a meat like chunk according to para 11 wherein the blood and intestines are mixed in advance of or at the same time of adding additional ingredients of the meat-like chunk.
13. A method of making a moist pet food according to paras 8 and 9, wherein the method comprises combining gravy, jelly, meat or meat batter to a meat like chunk according to paras 5 to 7.
14. A dry pet food wherein the dry food contains from 5 to 15% moisture and at least 5% by weight of a composition according to any one of paras 1 to 4.
15. A method of making a dry pet food according to para 14 wherein the method comprises the steps of combining at least one dry pet food ingredient to a composition of any one of paras 1 to 4 and forming a dry pet food.

## Claims

1. A meat like chunk comprising a mixture of blood and intestines, wherein the blood is present in the mixture in the range of 20% to 80% on a wet weight basis, and wherein the intestines and blood are in a ratio from 3: 1 to 1: 1.

2. The meat like chunk of claim 1, comprising at least one additional ingredient selected from the group consisting of grain gluten, cereal, other protein gels, minerals, vitamins and meat.

3. The meat like chunk of claim 1, wherein the blood and the intestines are poultry blood and poultry intestines.

4. The meat like chunk of claim 1, wherein the intestines are present in the mixture in the ranges of 80% to 20% on a wet weight basis.

5. The meat like chunk of claim 1, wherein the meat like chunk has a length from 5mm to 200mm.

6. The meat like chunk of claim 1, wherein the meat link chunk is in the form of a fibrous-meat-like chunk.

7. The meat like chunk of claim 1, comprising a gelling agent selected from the group consisting of xanthan gum, locust bean gum, agar gum, guar gum, sodium carboxy methylcellulose, or carrageenan alginate gum.

8. A method of making a meat like chunk comprising a mixture of blood and intestines, wherein the method comprises:
i) combining blood and intestines,
ii) optionally cooling the blood and/or the intestines to a temperature below 10° C,
iii) mixing together the blood and the intestines to form a mixture of blood and intestines, including one or more additional ingredients; and
iv) forming a meat like chunk,
wherein the one or more additional ingredients are selected from the group consisting of grain gluten, cereal, other protein gels, minerals, vitamins and meat, and
wherein the blood is present in the mixture of blood and intestines in the range of 20% to 80% on a wet weight basis, and wherein the intestines and blood are in a ratio from 3: 1 to 1:1.

9. The method of claim 8, wherein the blood and intestines are mixed in advance of or at the same time of adding additional ingredients of the meat like chunk.

10. The method of claim 8, further comprising combining the meat like chunk with gravy, jelly, meat or meat batter.

11. The method of claim 8, wherein the step of forming a meat like chunk comprises:
heating the mixture of blood, intestines, and one or more additional ingredients at a temperature of 90°C-150°C;
extruding the heated mixture through an extruder to produce a coagulated meat like chunk product;
cooling the coagulated meat like chunk product; and
cutting the coagulated meat like chunk product into chunks having a length from 5mm to 200mm.

12. The method of claim 8, wherein forming the meat like chunk comprises heating the mixture of blood, intestines, and one or more additional ingredients at 100-120 °C for 1 to 10 minutes.

13. The method of claim 8, comprising packaging the meat like chunk.

14. The method of claim 8, wherein the blood and the intestines are poultry blood and poultry intestines.

15. The method of claim 8, wherein the intestines are present in the mixture of blood and intestines in the ranges of 80% to 20% on a wet weight basis.
